# EUROPEAN PATENT SPECIFICATION

(11) **EP 3 421 339 B1**
(45) Date of publication and mention of the grant of the patent: **02.10.2019**
(21) Application number: 17382413.7
(22) Date of filing: 29.06.2017
(51) Int. Cl.: B62J 3/00, B60Q 5/00

(54) **ROAD SAFETY ELECTRONIC SOUND SYSTEM FOR QUIET VEHICLES**
ELEKTRONISCHES VERKEHRSSICHERHEITSTONSYSTEM FÜR LAUTLOSE FAHRZEUGE
SYSTÈME SONORE ÉLECTRONIQUE DE SÉCURITÉ DE ROUTE POUR VÉHICULES CALME

(43) Date of publication of application: 02.01.2019
(73) Proprietor: Ciordia Navarro, Paula, 29602 Marbella (Málaga) (ES); Ciordia Navarro, Pilar, 29602 Marbella (Málaga) (ES); Ciordia Navarro, Lucia, 29602 Marbella (Málaga) (ES)
(72) Inventor: Ciordia Navarro, Paula, 29602 Marbella (Málaga) (ES); Ciordia Navarro, Pilar, 29602 Marbella (Málaga) (ES); Ciordia Navarro, Lucia, 29602 Marbella (Málaga) (ES)
(74) Representative: Ungria López, Javier

(56) References cited:
- EP-A1- 2 505 465
- AU-A1- 2011 265 526
- CN-B- 103 921 718
- GB-A- 2 545 255
- US-A- 4 856 364
- US-A1- 2008 123 871

## Description

### OBJECT OF THE INVENTION

The present invention refers to a road safety electronic sound system for quiet vehicles, which is able to emit a permanent sound that can be turned off, comprising a capsule that contains the electronic components that control and operate it. The capsule can be coupled to a diverse range of housings with different anchoring structures adapted to different vehicles that are silent due to their traction, or carried by users themselves.

Therefore, the essential object of the invention is to emit a permanent sound, which can be turned off, in order to alert others about the presence of quiet vehicles that may be hard to notice while circulating, thus preventing potential accidents and dangerous manoeuvres caused by the reaction of pedestrians, passers-by or other transportation, or by other quiet vehicles when their presence is not detected.

The capsule also features other interconnected functions in order to achieve a final satisfactory outcome, such as a movement sensor, so that the sound system can be activated when needed depending on the context of road safety. In addition, the capsule comprises data connections such as Bluetooth and/or Wi-Fi in order to connect the invention to a Smartphone that will feature a computer application.

### BACKGROUND OF THE INVENTION

The conventional means used to alert about the presence of vehicles such as bicycles, motorcycles, cars, etc., are mostly acoustic systems, especially bells, sirens, horns, etc., which emit a one-off sound when a button is pushed, either by mechanical means (in the way of a common bell, for example) or by more innovative means such as electronic bells (some of which are equipped with lights). However, by using these devices a driver can only emit an intense one-off sound or burst of sound, so although these devices are useful for alerting other drivers and pedestrians by means of a concrete and one-off warning each time they are actuated, they are generally surprising to the pedestrian or driver as they catch them unaware of their presence, and since they do not get the chance of reacting, scaring them due to the unexpected one-off sound, thus creating uncomfortable and dangerous situations for both parties.

In addition, there are other means for alerting about the presence of a vehicle, from the most traditional to the most modern ones, which are generally carried by cyclists and are used to protect their physical integrity from other vehicles circulating on the same roads, such as cars, motorcycles, trucks, bicycles, etc., so their presence is detected in order to prevent the numerous unfortunate accidents suffered by these users, mainly light reflectors, lights and/or acoustic means. However, in recent times unregistered vehicles coexisting in the same paths as pedestrians are causing numerous accidents and scares to passers-by since they do not perceive them in time. In addition, hybrid and electric cars, motorcycles, mobility scooters, etc., that do not emit the typical noise of a vehicle with a traditional engine, that is caused by the power of the engine and that the human ear has linked for decades with the presence of these vehicles, have become imperceptible to passers-by and/or to other quiet vehicles circulating on the same roads.

In recent times, a general change in the perception of urban mobility is taking place, with a shift towards ecology and sustainability boosting the proliferation of vehicles such as bicycles, electric motorcycles, electric mobility scooters, scooters, electric and/or hybrid cars, which affect traffic giving rise to a conflictive situation wherein these means of transportation exist and circulate in the same spaces, such as practically silent vehicles as bicycles in relation to other vehicles or other bicycles, as well as pedestrians and passers-by, which often results in accidents and great scares for both parties, causing rejection against these means of transportation, slowing down and even making it impossible to really implement these new ways of moving, and therefore hindering the prevalence of said ecological means of transportation in safe and peaceful urban cohabitation, not only for cyclists or the drivers of other silent vehicles but also for pedestrians.

Therefore, although these alarm-type one-off acoustic alerts required by the current traffic regulations such as the ones mentioned above are necessary, they are inadequate for addressing the problem detailed due to the proliferation of vehicles powered by humans and/or batteries in our cities, which are silent to the human ear when they are moving due to their fittings and gears, both for other people driving the same type of vehicle or for passers-by walking and coexisting in the same paths, so a complementary sound device is required so that it can alert in a simple, charming and permanent way of the presence of said silent vehicles coexisting in the same roads and streets, without their sound being annoying nor causing distress, using the bell, horn, siren, etc., that every vehicle is required to have only when needed.

Document US 2008/0123871 A1, which is considered as the closest prior art, discloses a road safety electronic sound system for quiet vehicles that comprises a capsule having a speaker opening in a lateral surface, various connection terminals, a micro controller and a speaker that can produce the sound of a motor, audible for other traffic participants.

### DESCRIPTION OF THE INVENTION

The first aspect of the invention describes a road safety electronic sound system for quiet vehicles. The system comprises a capsule a cylinder shape, the lateral surface of the capsule comprising a first partial mesh grille and a connection terminal. The capsule further comprises a pair of push buttons on one of its bases and a microcontroller inside the capsule, wherein the microcontroller is connected to: a power supply for powering the microcontroller; the pair of push buttons for programming the functions of the microcontroller; the connection terminal for connecting it to an outer housing; a speaker; and, a movement sensor. So that the microcontroller, by means of the speaker, is able to emit a permanent sound, which can be switch off, or when the microcontroller detects by means of the movement sensor any movement in the surroundings of the electronic system itself.

The capsule can be coupled by means of the connection terminal to a diverse range of housings adapted to different vehicles and/or carried by the users of said vehicles. The capsule can also comprise Wi-Fi and/or Bluetooth connections.

The power supply powering the road safety electronic sound system for quiet vehicles is selected between a battery and a rechargeable battery.

Therefore, the capsule can be coupled to a first receptacle and connected to a first housing in the general shape of a rectangular prism, the upper free face of which comprises a first screen and a pair of push buttons linked to the pair of push buttons of the capsule, and the lower face of which comprises a protrusion in the shape of an inverted "T" for making a tongue and groove coupling to a first additional fixing body for securing it to the handlebar of a vehicle, while one of the smaller lateral faces thereof, front facing as the vehicle moves forward, comprises a second mesh grille and a light source, and the other smaller lateral face thereof, rear facing as the vehicle moves forward, comprises a first connection port.

The first additional fixing body for securing it to the handlebar of a vehicle comprises a fixing clamp for securing it to the handlebar and a support body finished off with a recess shaped as an inverted "T" complementary to the protrusion shaped as an inverted "T" of the first housing.

The first screen of the first additional body displays the status of the battery and the sound control.

In addition, the capsule can be coupled and connected to a second receptacle of a second housing in the general shape of a rectangular prism, the upper free face of which comprises a second screen that is linked to a pair of on-off actuators for regulating the sound and selecting the sound type, and the rear face of which comprises adhesive tapes for securing it to the vehicle it is adapted to, and said second housing is connected to a second additional body for emitting and amplifying the sound and for detecting presence, by means of a second connection port and a third connection port for both.

The capsule can be coupled to a third elastic housing in the general shape of a circle, based on a closed surface, the perimeter of which extends orthogonally, and which closes inwards defining a central oval orifice creating a space for coupling the capsule, with the pair of push buttons of the capsule arranged in relation to corresponding elevations of the closed circular elastic surface and the connection terminal in an internal lateral orifice of the space created, so that the closed circular elastic surface extends axially along an elongated branch comprising on the near free side thereof a keyhole slot fixing, which acts as female, and comprising a small protrusion opposite said slot, which acts as male.

The first mesh grille of the lateral surface of the capsule is arranged in correspondence with a section with orifices of the orthogonal extension of the closed circular elastic surface of the third housing.

In short, the road safety electronic sound system for quiet vehicles basically comprises a capsule featuring the electronic means for controlling and operating it, and emitting and regulating the sound. Optionally, the capsule may comprise a movement sensor, as well as a Wi-Fi and/or Bluetooth connection. The capsule can be connected to different housings, and depending on the case, to the corresponding additional bodies for optimal adaptation of the road safety electronic sound system for quiet vehicles to the different structures and the most common silent means of transportation.

Therefore, an adequate electronic connection between the capsule and the different housings is established depending on the different structures and means of transportation or user for all kinds of silent vehicles.

When the capsule is activated, once it has been coupled to the corresponding housing, an alert can be made about the close proximity of the vehicles featuring it without frightening or startling people, thanks to emitting a permanent sound. The type of sound may change depending on the choice of the user, so it may provide a wide range of sounds that emulate, for example, the sounds of traditional means of transportation; and, therefore, those that are subconsciously associated with the presence of a certain type of vehicle, aiding reflex actions, such as the pedalling of a bicycle, the discs and bearings of the wheels; the hooves of a horse, the soft rumble of the mechanical engine of a car or motorcycle, etc., making it possible to select the most adequate sound required for each vehicle. The volume and type of sound can be adjusted depending on the needs of each time and place.

As explained above, the capsule may comprise a movement sensor so that the device emits the permanent sound when it detects any movement in its surroundings, while when the vehicle is moving said emission may be in standby mode, as it does not perceive the vibration that the vehicle itself generates as it moves. The capsule may also comprise a Bluetooth and/or Wi-Fi 33 connection to allow the user the option to link the invention to the mobile phone (Smartphone type phone) of the user, which will feature a computer application to synchronise both devices. In this way, the capsule could be managed from the Smartphone of the user, which since it is connected to the invention, it may alert of incoming calls from the speaker of the invention in order to avoid any distractions or carelessness caused by looking at the phone while driving in order to check if a call or a message has been received.

Additionally, the capsule and/or the housings themselves will comprise an additional option of the obligatory bell, which can add a specific obligatory sound to the permanent sound emission.

The road safety electronic sound system for quiet vehicles comprises means for anchoring it to different vehicles, and it can also be coupled and adapted to the structures and/or housings of these vehicles during their manufacturing process, so that the manufacturer adds it in the assembly line and adapts it to the specific characteristics and driving convenience of the vehicle.

It essentially consists of three types of interchangeable housings depending on the type of vehicle: a first type of vehicle comprising a handlebar (bicycles, scooters, mobility scooters or similar) by means of a first housing and a first additional body, anchored to the handlebar and to the first body; a second type of vehicle (cars, motorcycles and similar vehicles) by means of a second housing, fixed to the vehicle and accessible to the user and a second additional body, mounted in another part of the vehicle such as below the bonnet; and a third type of vehicle (skateboards, roller skates or similar) based on a third elastic housing sensitive to touch, in the shape of a sleeve, so that the capsule of the road safety sound device can be triggered directly, in which case the invention would be coupled directly to the body of users, and therefore to the accessories used by them (belt, belt loop, buttonholes or similar).

To complement the description being made below, and to make it easier to better understand the characteristics of the invention, this descriptive report is accompanied by a set of drawings in which, for illustrative and not restrictive purposes, the most characteristic details of the invention are represented.

### BRIEF DESCRIPTION OF THE DESIGNS

Figure 1. Shows a plan view of the front face of the capsule comprising the road safety sound system, displaying the connection terminal and a pair of push buttons.
Figure 2. Shows a front elevation view of the capsule of figure 1, displaying the partial mesh grille of the sound output, the pair of push buttons and the power supply.
Figure 3. Shows a view of the electrical schematics of the components of the capsule.
Figure 4. Shows a plan view of a first practical embodiment of a first housing to which the capsule is coupled, which is designed for vehicles comprising a handlebar where said housing is mounted on.
Figure 5. Shows a lateral elevation view of the first housing of the previous figure.
Figure 6. Shows a front elevation view of the first housing of figure 5, displaying a mesh grille that helps propagate the sound and a light bulb.
Figure 7. Shows a rear elevation view of the first housing of figure 5, displaying a protrusion on the lower face thereof in the shape of an inverted "T", as well as a connection port and the lid for closing the housing.
Figure 8. Shows a lateral elevation view of a first additional body, related to the first housing, comprising a clamp for securing it on the handlebar of the corresponding vehicle and an upper support body.
Figure 9. Shows a front view of the first additional body of the previous figure, displaying how the support body is finished off with a recess in the shape of an inverted "T".
Figure 10. Shows a front view of a second practical embodiment of the invention based on a second housing to which the capsule is coupled and connected, and which is designed for vehicles such as quiet cars and motorcycles.
Figure 11. Shows a rear view of the second housing of the previous figure, displaying the anchoring means comprised of a pair of adhesive tapes.
Figure 12. Shows an elevation view of a second additional body, related to the second housing, for emitting and amplifying the sound as well as detecting presence, connected to the second housing by means of respective connection ports.
Figure 13. Shows an upper plan view of a third practical embodiment of the invention based on a third elastic housing for coupling the capsule, displaying the general circular shape thereof comprising an axially elongated branch and a small protrusion opposite it.
Figure 14. Shows a lower plan view of the previous figure, displaying the central oval orifice allowing the capsule to access the defined space.
Figure 15. Shows a cross-sectional view of the third housing, displaying the capsule in the defined space, as well as a push button of the capsule and the elevation of the elastic housing related to it.

### DESCRIPTION OF A PREFERRED EMBODIMENT

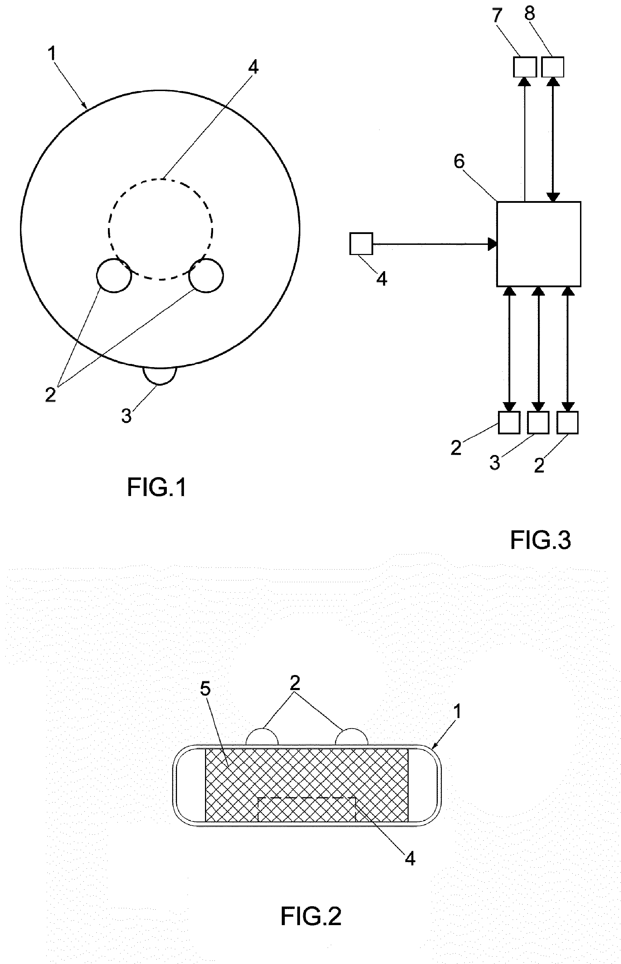

In light of the figures mentioned above and according to the numbering adopted, we can see how the road safety electronic sound system for quiet vehicles (see figures 1-3) is essentially based on a capsule 1 in the general shape of a small cylinder that comprises in one of the bases thereof a first pair of push buttons 2, with the closed lateral surface thereof comprising a first partial mesh grille 5 and a connection terminal 3, while containing in the inside thereof the electronic components for control and operation comprising a microcontroller 6 linked to the first pair of push buttons 2, to a battery or a rechargeable battery 4 powering it, to the connection terminal 3, as well as to a speaker 7 and a movement sensor 8. The capsule 1 may be designed in other configurations, maintaining the functionality thereof.

The first pair of multifunction push buttons 2 is able to connect and disconnect the capsule 1, select different sounds, regulate the volume and activate and deactivate the movement sensor 8. Therefore, the first pair of push buttons 2 provides a diverse range of functions, aided by the use of different colours to facilitate identifying said functions, that is, if the buttons are in the function for searching different sounds, regulating the volume, etc.

In addition, the capsule 1 may comprise a Wi-Fi and/or Bluetooth connection, making it possible to connect the capsule to a Smartphone featuring a software application in order to control the system of the present invention through the telephone of the user, and allowing users to hear the alerts for calls and messages.

The capsule 1 has the essential goal of emitting a sound as quiet vehicles are circulating, being incorporated on the vehicle itself or carried by the user, so it can be coupled to different housings depending on the type of vehicle or if users themselves are carrying and using it.

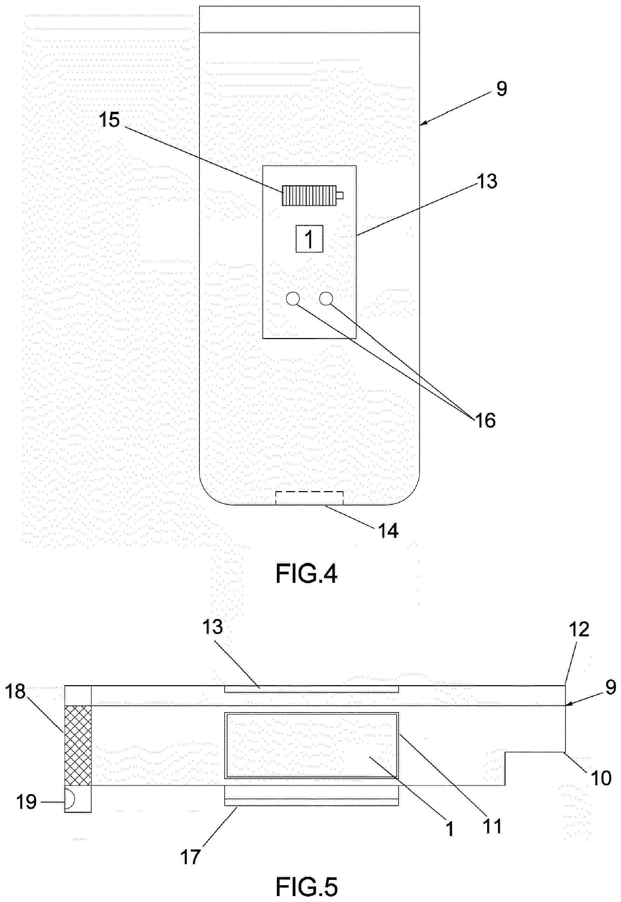

Therefore, in a first embodiment (see figs. 4-7), the capsule 1 can be coupled and connected to a first housing 9 in the general shape of a rectangular prism comprising a base body 10 with a receptacle 11 for coupling and connecting it, and a lid 12 comprising a screen 13, so that when the capsule 1 is coupled the connection terminal 3 is connected to the electronic means for operating the device present in the first housing 9, such as the screen 13, a first connection port 14 and a light source 19, which are powered from the capsule 1, while the first pair of push buttons 2 is linked to the second pair of push buttons 16.

In this way, the first pair of push buttons 2 of the capsule 1 is linked to the second pair of push buttons 16 of the screen 13 of the first housing 9 for connecting/disconnecting said capsule, controlling the volume, selecting the sound and activating/deactivating the movement sensor 8.

The aforementioned screen 13 displays the status of the different functions, such as the display 15 of the battery 4 status or the volume control, the type of sound selected or the volume control.

The lid 12 and the screen 13 of the aforementioned first housing 9 constitute the upper outer face thereof, and the lower face thereof relative to the base body 10 comprises a protrusion 17 in the shape of an inverted "T", while one of the smaller lateral faces thereof, front facing as the vehicle on which it is mounted moves forward, comprises a second mesh grille 18 and a light source 19, and the other smaller lateral face thereof, rear facing as the vehicle on which it is mounted moves forward, comprises a first connection port 14, which recharges the battery if this was the kind of power supply it comprised, and additionally, a dynamo type adapter may be connected in order to take advantage of the energy generated by the vehicle as it circulates.

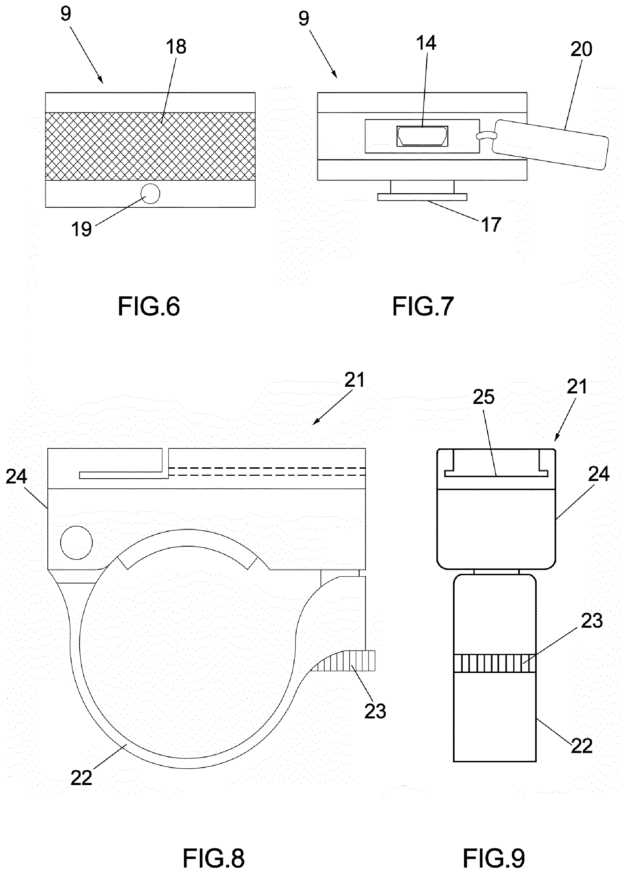

The first connection port 14 of the first housing 9 is protected by a closure element 20 that can be actuated. (see fig. 7)

The first housing 9 (see figs. 8-9), which is used for quiet vehicles comprising handlebars, is linked to a first additional body 21 for mounting it on the handlebar of a vehicle such as bicycles, scooters, or motorised vehicles for people with reduce mobility, and comprises a clamp 22 that can be actuated by means of a fixing screw 23 and an upper support body 24 finished off with a recess 25 in the shape of an inverted "T" that is complementary with the protrusion in the shape of an inverted "T" of the first housing 9, so that it is mounted by means of sliding on it, fitting into it, and locking with it.

Therefore, when the first housing 9 is mounted on the first additional piece 21 fixed to the handlebar of a vehicle, the protrusion 17 in the shape of an inverted "T" slides on the recess 25 of the support body 24 and anchors to and locks with it by means of a pair of projecting wings 35 with which the aforementioned support body 24 is finished off.

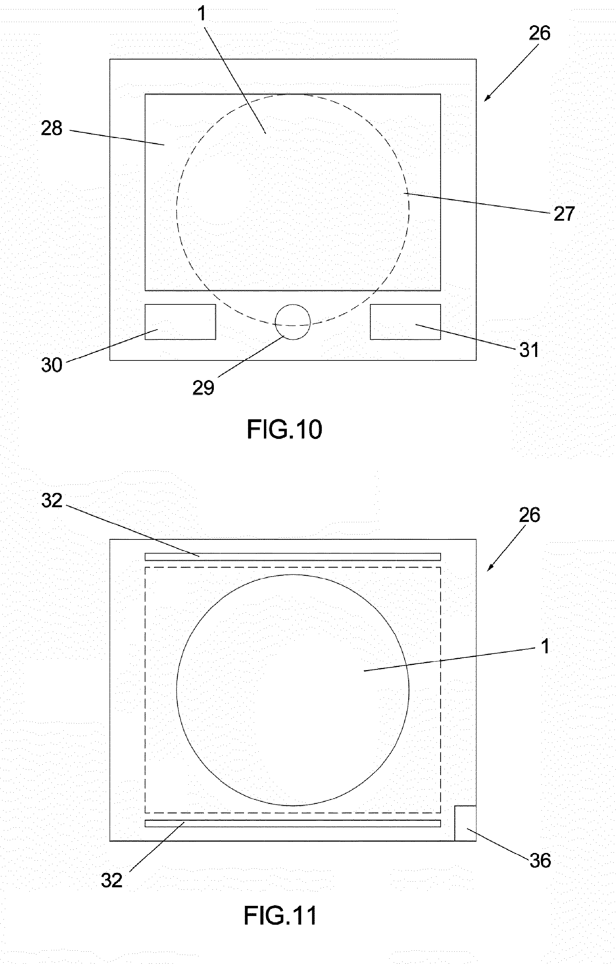

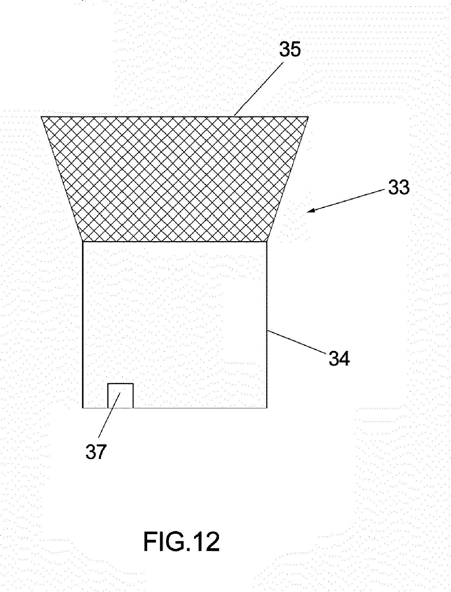

In a second embodiment (see figs. 10-12) of the invention, the capsule 1 may be coupled and connected to a second receptacle 27 of a second housing 26 in the general shape of a rectangle, comprising in the front visible face thereof a second screen 28 displaying the different operating states, as indicated for the first screen 13, with the terminal 3 fitting in the terminal 29 of the second housing 26, and being linked to the first pair of push buttons 2, equally linked to the first pair of actuators 30 and 31 for connecting/disconnecting the device, selecting the volume and the type of sound desired.

The second housing 26 comprises on the rear face thereof anchoring means such as adhesive tapes 32 for fixing it on a surface of a car or motorcycle, which are the vehicles it is used for, and which will be linked to a second additional body 33 for emitting and amplifying the sound, so that said second additional body 33 comprises a base 34, with the second additional body 33 being mounted on a different part of the vehicle, such as next to the horn under the bonnet in cars or next to the horn in motorcycles, and being connected to the second housing 26 by means of cabling between a second connection port 36 and a third connection port 37 for both, also being linked to the movement sensor 8. In this way, the free base 35 will amplify the sound and make it perfectly audible.

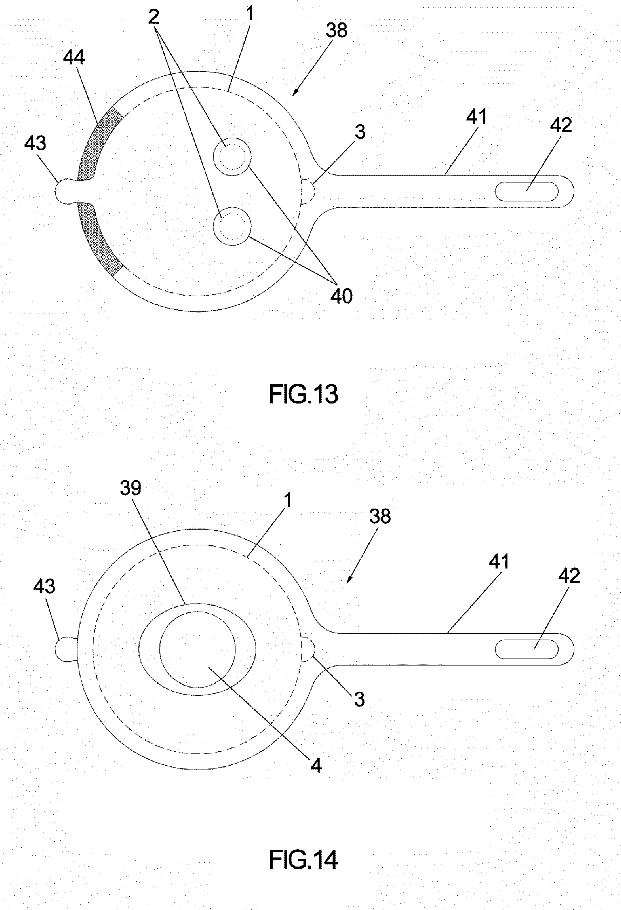

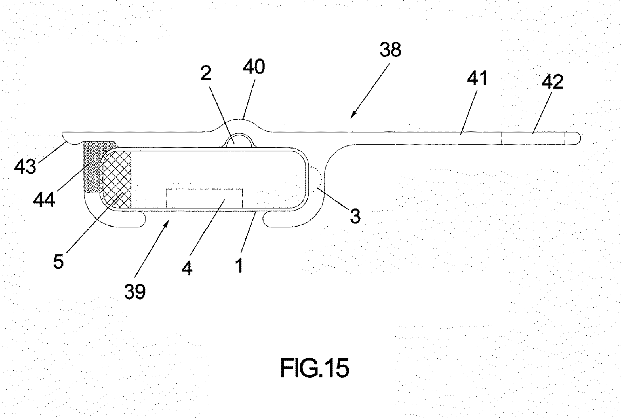

In a third embodiment (see figs. 13-15) of the invention, the capsule 1 may be coupled to a third elastic housing 38, made of silicon or similar, in the general shape of a circle, the perimeter of which extends orthogonally, and which closes inwards defining a central oval orifice 39 creating a space for coupling the capsule 1, with the pair of push buttons 2 of the capsule 1 arranged in relation to corresponding elevations 40 of the closed circular elastic surface and the connection terminal 3 fitted in an internal lateral orifice of the space created, so that the closed circular elastic surface extends axially along an elongated branch 41 comprising on the near free side thereof a keyhole slot fixing 42, which acts as female, and comprising a small protrusion 43 opposite said slot, which acts as male.

When the capsule 1 is mounted on the space defined for such effect in the third housing 38, the first mesh grille 5 of the lateral surface of the capsule is arranged in correspondence with a section with orifices 44 of the orthogonal extension of the closed circular elastic surface of the third housing 38, aiding to propagate the sound.

In this way, users themselves may be able to wear this third elastic housing 38 with the capsule 1 mounted on it by threading the elongated branch 41 through a buttonhole, belt loop or belt they are wearing, and close it by fitting the small protrusion 43 in the keyhole slot fixing 42 of the elongated branch 41, carrying it and being able to activate it as desired, so that this third embodiment is preferably used by users of vehicles such as skateboards or roller skates that do not have handlebars, or when their handlebars are very small, so that they may also make use of this anchoring system. Since their supporting surface is very close to the ground and the device would not be audible if it was place on said surface.

## Claims

1. Road safety electronic sound system for quiet vehicles, **characterized in that** it comprises a capsule (1) having a cylinder shape, the lateral surface of the capsule comprising a partial mesh grille (5) and a connection terminal (3); the capsule (1) further comprises a pair of push buttons (2) on one of the bases of the capsule and a microcontroller (6) inside said capsule; wherein the microcontroller (6) is connected to:
- a power supply (4) for powering the microcontroller (6);
- the pair of push buttons (2) for programming the functions of the microcontroller (6);
- the connection terminal (3) for connecting it to an outer housing (9, 26, 38);
- a speaker (7); and,
- a movement sensor (8);
so that the microcontroller (6), by means of the speaker (7), is able to emit a permanent sound, which can be switch off, or when the microcontroller (6) detects by means of the movement sensor (8) any movement in the surroundings of the electronic system itself.

2. Road safety electronic sound system for quiet vehicles, according to claim 1, wherein the power supply is selected between a battery and a rechargeable battery (4).

3. Road safety electronic sound system for quiet vehicles, according to claim 1, wherein the capsule (1) comprises means for data connection selected between Wi-Fi and Bluetooth.

4. Road safety electronic sound system for quiet vehicles, according to claim 1, wherein the capsule (1) is attachable to a first receptacle (11) and connectable to a first housing (9) in the general shape of a rectangular prism, the upper free face of which comprises a first screen (13) and a pair of push buttons (16) linked to the pair of push buttons (2) of the capsule (1), and the lower face of which comprises a protrusion (17) in the shape of an inverted "T" for making a tongue and groove coupling to a first additional fixing body (21) for securing it to the handlebar of a vehicle, while one of the smaller lateral faces thereof, front facing as the vehicle moves forward, comprises a second mesh grille (18) and a light source (19), and the other smaller lateral face thereof, rear facing as the vehicle moves forward, comprises a first connection port (14).

5. Road safety electronic sound system for quiet vehicles, according to claim 4, wherein the first additional fixing body (21) for securing it to the handlebar of a vehicle comprises a fixing clamp (22) for securing it to the handlebar and a support body (24) finished off with a recess (25) shaped as an inverted "T" that is complementary to the protrusion (17) shaped as an inverted "T" of the first housing (9).

6. Road safety electronic sound system for quiet vehicles, according to claim 4, wherein the second screen (13) displays the status of the battery (4) and the sound control.

7. Road safety electronic sound system for quiet vehicles, according to claim 1, wherein the capsule (1) is attachable and connectable to a second receptacle (27) of a second housing (26) in the general shape of a rectangular prism, the upper free face of which comprises a second screen (28) that is linked to a pair of on-off actuators (30,31) for regulating the sound and selecting the sound type, and the rear face of which comprises adhesive tapes (32) for securing it to the vehicle it is adapted to, and said second housing (26) is connected to a second additional body (33) for emitting and amplifying the sound and for detecting presence, by means of a second connection port (36) and a third connection port (37) for both.

8. Road safety electronic sound system for quiet vehicles, according to claim 1, wherein the capsule (1) is attachable to a third elastic housing (38) in the general shape of a circle, based on a closed surface, the perimeter of which extends orthogonally, and which closes inwards defining a central oval orifice (39) creating a space for coupling the capsule (1), with the pair of push buttons (2) of the capsule (1) arranged in relation to corresponding elevations (40) of the closed circular elastic surface and the connection terminal (3) in an internal lateral orifice of the space created, so that the closed circular elastic surface extends axially along an elongated branch (41) comprising on the near free side thereof a keyhole slot fixing (42), which acts as female, and comprising a small protrusion (43) opposite said slot, which acts as male.

9. Road safety electronic sound system for quiet vehicles, according to claim 7, wherein the first mesh grille (5) of the lateral surface of the capsule (1) is arranged in correspondence with a section with orifices (44) of the orthogonal extension of the closed circular elastic surface of the third housing (38).

## Patentansprüche

1. Elektronisches Verkehrssicherheitstonsystem für lautlose Fahrzeuge, **dadurch gekennzeichnet, dass** es eine Kapsel (1) mit Zylinderform aufweist, wobei die seitliche Oberfläche der Kapsel ein Teilgitter (5) und einen Verbindungsanschluss (3) aufweist; die Kapsel (1) ferner zwei Druckknöpfe (2) als Paar auf einem der Basiselemente der Kapsel und eine Mikrosteuerung (6) im Inneren der Kapsel aufweist; wobei die Mikrosteuerung (6) verbunden ist mit:
- einer Leistungsversorgung (4) zur Speisung der Mikrosteuerung (6);
- den zwei Druckknöpfen (2) zum Programmieren der Funktionen der Mikrosteuerung (6);
- dem Verbindungsanschluss (3) zur Verbindung mit einem Außengehäuse (9, 26, 38);
- einem Lautsprecher (7); und
- einem Bewegungssensor (8);
derart, dass die Mikrosteuerung (6) durch den Lautsprecher (7) in der Lage ist, einen dauerhaften Ton, der abschaltbar ist, oder einen Ton auszusenden, wenn die Mikrosteuerung (6) durch den Bewegungssensor (8) eine Bewegung in der Umgebung des elektronischen Systems erfasst.

2. Elektronisches Verkehrssicherheitstonsystem für lautlose Fahrzeuge nach Anspruch 1, wobei die Leistungsversorgung aus einer Batterie und einer aufladbaren Batterie (4) ausgewählt ist.

3. Elektronisches Verkehrssicherheitstonsystem für lautlose Fahrzeuge nach Anspruch 1, wobei die Kapsel (1) eine Einrichtung zur Datenverbindung in Form von Wi-Fi oder Bluetooth aufweist.

4. Elektronisches Verkehrssicherheitstonsystem für lautlose Fahrzeuge nach Anspruch 1, wobei die Kapsel (1) an einer ersten Aufnahme (11) anbringbar und mit einem ersten Gehäuse (9), das die allgemeine Form eines rechteckigen Prismas hat, verbindbar ist, dessen obere freie Fläche einen ersten Bildschirm (13) und zwei Druckknöpfe (16) als Paar aufweist, die mit den zwei Druckknöpfen (2) der Kapsel (1) verbunden sind, und dessen untere Fläche einen Vorsprung (17) in Form eines umgekehrten "T" aufweist, so dass eine Feder und Nut gebildet sind, die mit einem ersten Zusatzfixierkörper (21) zur Befestigung an der Griffleiste eines Fahrzeugs verbunden ist, wobei eine der kleineren seitlichen Flächen, die bei Bewegung des Fahrzeugs nach vorne zeigt, ein zweites Gitter (18) und eine Lichtquelle (19) aufweist, und die andere kleinere seitliche Fläche, die bei Bewegung des Fahrzeugs nach hinten zeigt, einen ersten Anschlussport (14) aufweist.

5. Elektronisches Verkehrssicherheitstonsystem für lautlose Fahrzeuge nach Anspruch 4, wobei der erste Zusatzfixierkörper (21) zur Befestigung an der Griffleiste eines Fahrzeugs eine Fixierklemme (22) zur Befestigung an der Griffleiste und einen Haltekörper (24) aufweist, der eine Vertiefung (25) aufweist, die als ein umgekehrtes "T" geformt ist und komplementär zu dem Vorsprung (17) ist, der als ein umgekehrtes "T" des ersten Gehäuses (9) geformt ist.

6. Elektronisches Verkehrssicherheitstonsystem für lautlose Fahrzeuge nach Anspruch 4, wobei der zweite Bildschirm (13) den Status der Batterie (4) und der Tonsteuerung anzeigt.

7. Elektronisches Verkehrssicherheitstonsystem für lautlose Fahrzeuge nach Anspruch 1, wobei die Kapsel (1) an einer zweiten Aufnahme (27) eines zweiten Gehäuses (26), das allgemein die Form eines rechteckigen Prismas hat, anbringbar und damit verbindbar ist, dessen obere freie Fläche einen zweiten Bildschirm (28) aufweist, der mit zwei Ein-Aus-Betätigungselementen (30, 31) als Paar zum Steuern des Tons und zur Auswahl der Klangart verbunden ist, und dessen hintere Fläche Klebebänder (32) zur Befestigung an dem Fahrzeug aufweist, für welches es vorgesehen ist, und wobei das zweite Gehäuse (26) mit einem zweiten Zusatzkörper (33) zum Aussenden und Verstärken des Tons und zur Präsenzüberwachung mittels eines zweiten Anschlussports (36) und eines dritten Anschlussports (37) verbunden ist.

8. Elektronisches Verkehrssicherheitstonsystem für lautlose Fahrzeuge nach Anspruch 1, wobei die Kapsel (1) an einem dritten elastischen Gehäuse (38), das im Wesentlichen die Form eines Kreises hat auf Basis einer geschlossenen Oberfläche anbringbar ist, deren Rand senkrecht verläuft, und nach innen hin geschlossen ist, wodurch eine zentrale ovale Öffnung (39) begrenzt wird, die einen Raumbereich zur Ankopplung der Kapsel (1) an die zwei Druckknöpfe (2) der Kapsel (1) erzeugt, die zugeordnet zu entsprechenden Erhebungen (40) der geschlossenen runden elastischen Oberfläche und dem Verbindungsanschluss (3) in einer inneren seitlichen Öffnung des erzeugten Raumbereichs angeordnet sind derart, dass die geschlossene runde elastische Oberfläche sich axial entlang eines länglichen Ablegers (41) erstreckt, der auf der nahen freien Seite einen Befestigungslochschlitz (42) aufweist, der als Buchse dient, und einen kleinen Vorsprung (43) gegenüberliegend zu dem Schlitz aufweist, der als Stift dient.

9. Elektronisches Verkehrssicherheitstonsystem für lautlose Fahrzeuge nach Anspruch 7, wobei das erste Gitter (5) der seitlichen Oberfläche der Kapsel (1) entsprechend zu einem Abschnitt mit Öffnungen (44) der senkrechten Erstreckung der geschlossenen, runden, elastischen Oberfläche des dritten Gehäuses (38) angeordnet ist.

## Revendications

1. Système électronique sonore de sécurité routière pour des véhicules silencieux, **caractérisé en ce qu'**il comprend une capsule (1) ayant une forme de cylindre, la surface latérale de la capsule comprenant une grille de maillage partielle (5) et une borne de connexion (3) ; la capsule (1) comprend en outre une paire de boutons-poussoirs (2) sur l'une des bases de la capsule et un microcontrôleur (6) à l'intérieur de ladite capsule ; dans lequel le microcontrôleur (6) est connecté à :
- une alimentation (4) pour alimenter le microcontrôleur (6) ;
- la paire de boutons-poussoirs (2) pour programmer les fonctions du microcontrôleur (6) ;
- la borne de connexion (3) pour le connecter à un logement extérieur (9, 26, 38) ;
- un haut-parleur (7) ; et
- un capteur de mouvement (8) ;
de sorte que le microcontrôleur (6), au moyen du haut-parleur (7), soit capable d'émettre un son permanent, qui peut être désactivé, ou lorsque le microcontrôleur (6) détecte, au moyen du capteur de mouvement (8), un mouvement quelconque aux alentours du système électronique lui-même.

2. Système électronique sonore de sécurité routière pour des véhicules silencieux, selon la revendication 1, dans lequel l'alimentation est sélectionnée entre une batterie et une batterie rechargeable (4).

3. Système électronique sonore de sécurité routière pour des véhicules silencieux, selon la revendication 1, dans lequel la capsule (1) comprend des moyens pour une connexion de données sélectionnée entre Wi-Fi et Bluetooth.

4. Système électronique sonore de sécurité routière pour des véhicules silencieux, selon la revendication 1, dans lequel la capsule (1) peut être fixée à un premier réceptacle (11) et peut être connectée à un premier logement (9) sous la forme générale d'un prisme rectangulaire, dont la face libre supérieure comprend un premier écran (13) et une paire de boutons-poussoirs (16) liés à la paire de boutons-poussoirs (2) de la capsule (1), et dont la face inférieure comprend une protubérance (17) sous la forme d'un « T » inversé pour réaliser un accouplement par languette et rainure à un premier corps de fixation supplémentaire (21) pour le fixer au guidon d'un véhicule, tandis que l'une des plus petites faces latérales de celui-ci, orientée vers l'avant alors que le véhicule se déplace vers l'avant, comprend une deuxième grille de maillage (18) et une source de lumière (19), et l'autre plus petite face latérale de celui-ci, orientée vers l'arrière alors que le véhicule se déplace vers l'avant, comprend un premier port de connexion (14).

5. Système électronique sonore de sécurité routière pour des véhicules silencieux, selon la revendication 4, dans lequel le premier corps de fixation supplémentaire (21) pour le fixer au guidon d'un véhicule comprend une pince de fixation (22) pour le fixer au guidon et un corps de support (24) se terminant par un évidement (25) sous la forme d'un « T » inversé qui est complémentaire à la protubérance (17) sous la forme d'un « T » inversé du premier logement (9).

6. Système électronique sonore de sécurité routière pour des véhicules silencieux, selon la revendication 4, dans lequel le deuxième écran (13) affiche l'état de la batterie (4) et la commande du son.

7. Système électronique sonore de sécurité routière pour des véhicules silencieux, selon la revendication 1, dans lequel la capsule (1) peut être fixée et connectée à un deuxième réceptacle (27) d'un deuxième logement (26) sous la forme générale d'un prisme rectangulaire, dont la face libre supérieure comprend un deuxième écran (28) qui est lié à une paire d'actionneurs tout ou rien (30, 31) pour réguler le son et sélectionner le type de son, et dont la face arrière comprend des bandes adhésives (32) pour le fixer au véhicule pour lequel il est conçu, et ledit deuxième logement (26) est relié à un deuxième corps supplémentaire (33) pour émettre et amplifier le son et pour détecter une présence, au moyen d'un deuxième port de connexion (36) et d'un troisième port de connexion (37) pour les deux.

8. Système électronique sonore de sécurité routière pour des véhicules silencieux, selon la revendication 1, dans lequel la capsule (1) peut être fixée à un troisième logement élastique (38) sous la forme générale d'un cercle, basée sur une surface fermée, dont le périmètre s'étend orthogonalement, et qui se ferme vers l'intérieur définissant un orifice ovale central (39) créant un espace pour accoupler la capsule (1) avec la paire de boutons-poussoirs (2) de la capsule (1) agencés en relation avec des élévations (40) correspondantes de la surface élastique circulaire fermée et la borne de connexion (3) dans un orifice latéral interne de l'espace créé, de sorte que la surface élastique circulaire fermée s'étende axialement le long d'une branche allongée (41) comprenant, sur le côté libre proche de celle-ci, une fixation par fente en trou de serrure (42), qui agit en tant que partie femelle, et comprenant une petite protubérance (43) opposée à ladite fente, qui agit en tant que partie mâle.

9. Système électronique sonore de sécurité routière pour des véhicules silencieux, selon la revendication 7, dans lequel la première grille de maillage (5) de la surface latérale de la capsule (1) est agencée en correspondance avec une section avec les orifices (44) de l'extension orthogonale de la surface élastique circulaire fermée du troisième logement (38).
